# FASCICULE DE BREVET EUROPEEN

(11) **EP 2 059 618 B1**
(45) Date de publication et mention de la délivrance du brevet: **22.07.2015**
(21) Numéro de dépôt: 07823437.4
(22) Date de dépôt: 22.08.2007
(51) Int. Cl.: C22B 23/00

(54) **PROCEDE DE TRAITEMENT HYDROMETALLURGIQUE D'UN MINERAI DE NICKEL ET DE COBALT LATERITIQUE, ET PROCEDE DE PREPARATION DE CONCENTRES INTERMEDIAIRES OU DE PRODUITS COMMERCIAUX DE NICKEL ET/OU DE COBALT L'UTILISANT**
VERFAHREN ZUR HYDROMETALLURGISCHEN BEHANDLUNG EINES LATERITISCHEN NICKEL/KOBALT-ERZES UND VERFAHREN ZUR HERSTELLUNG VON NICKEL- UND/ODER KOBALT-ZWISCHENPRODUKTKONZENTRATEN ODER INDUSTRIEPRODUKTEN DAMIT
PROCESS FOR THE HYDROMETALLURGICAL TREATMENT OF A LATERITIC NICKEL/COBALT ORE AND PROCESS FOR PRODUCING NICKEL AND/OR COBALT INTERMEDIATE CONCENTRATES OR COMMERCIAL PRODUCTS USING IT

(30) Priorité: 06.09.2006 FR 0607816
(43) Date de publication de la demande: 20.05.2009
(73) Titulaire: Eramet, 75015 Paris (FR)
(72) Inventeur: AGIN, Jérôme, F-75013 Paris (FR); LE QUESNE, Yves, F-78120 Rambouillet (FR); BERTHOMIEU, Bertrand, F-78120 Rambouillet (FR)
(74) Mandataire: Blot, Philippe Robert Emile
(86) Numéro de dépôt international: PCT/FR2007/001389
(87) Numéro de publication internationale: WO 2008/029009

(56) Documents cités:
- WO-A-01/32943
- WO-A-03/093517
- WO-A1-01/32944
- FR-A- 2 459 295
- US-A- 4 541 868
- US-A1- 2006 002 835
- US-B1- 6 379 637
- US-B2- 6 379 636
- STOPIC S ET AL: "SULPHURIC ACID LEACHING OF THE SERBIAN NICKEL LATERITIC ORE SCHWEFELSAURE LAUGUNG SERBISCHER NICKELLATERITERZE LIXIVIATION SULFURIQUE DES MINERAIS LATERITIQUES DE NICKEL" ERZMETALL, GMBD - MEDIENVERLAG, CLAUSTHAL-ZELLERFELD, DE, vol. 56, no. 4, 2003, pages 204-209, XP001162519 ISSN: 0044-2658
- AGATZINI-LEONARDOU S ET AL: "Beneficiation of a Greek serpentinic nickeliferous ore Part II. Sulphuric acid heap and agitation leaching" HYDROMETALLURGY, ELSEVIER SCIENTIFIC PUBLISHING CY. AMSTERDAM, NL, vol. 74, no. 3-4, octobre 2004 (2004-10), pages 267-275, XP004572058 ISSN: 0304-386X
- "NICKEL LATERITES: TO SQUEEZE OR NOT TO SQUEEZE?" MINING JOURNAL, MINING JOURNAL LTD. LONDON, GB, vol. 338, 2002, page 7, XP001245698

## Description

L'invention concerne le traitement des minerais oxydés de nickel et de cobalt par voie hydrométallurgique, en vue de l'obtention d'une solution renfermant notamment le nickel et le cobalt extraits des minerais, que l'on peut traiter ensuite pour en récupérer le nickel et/ou le cobalt sous forme de concentrés intermédiaires ou de produits commerciaux.

Les minerais de nickel et de cobalt se répartissent en diverses catégories. L'une des principales est les minerais dits « oxydés » ou « latéritiques » dans lesquels le nickel et le cobalt sont sous forme d'oxydes, et qui se présentent sous forme de deux fractions disposées en couches superposées :
- une fraction dite « limonite » (ou, parfois, « latérite »), relativement pauvre en magnésium et relativement riche en fer ;
- une fraction dite « saprolite », qui, inversement, est relativement riche en magnésium et relativement pauvre en fer.

Différents procédés hydrométallurgiques pour l'obtention de cette solution de nickel et de cobalt, préalable à leur récupération sous forme métallique, ont été proposés. Le procédé le plus classique est le procédé « Moa Bay » dans lequel on réalise la lixiviation d'une pulpe à 40% de solides d'un minerai constitué essentiellement de limonite dans de l'acide sulfurique à 245-270°C et 35-55 bar, suivie par une séparation solide/liquide et une neutralisation de l'acide libre à pression atmosphérique. Le fer et l'aluminium restant en solution sont précipités par ajout de calcaire broyé (historiquement de la boue de corail). Le nickel et le cobalt sont récupérés à partir de la solution par précipitation de sulfures.

Un inconvénient de ce procédé est que la présence conjointement à la limonite d'une fraction importante de minerai saprolitique, qui est fortement basique du fait de sa forte concentration en magnésium, provoque une consommation d'acide élevée.

Des solutions dérivées de ce procédé ont été proposées, visant à traiter au mieux les différents types de minerais latéritiques ou leurs fractions, en consommant le moins d'acide possible et/ou en se passant des autoclaves coûteux et à la fiabilité délicate à assurer, que l'on doit utiliser lorsqu'on travaille sous pression.

En particulier, on peut citer le document US-A-3 793 432 qui propose de lixivier de la limonite seule avec de l'acide sulfurique à un pH inférieur à 1,5, tout en ajoutant des agents provoquant la précipitation du fer au sein d'un précipité de jarosite. Cette lixiviation a lieu à pression atmosphérique, mais requiert des temps de traitement très élevés, 40 à 100 heures, pour l'obtention d'une bonne extraction du nickel et d'une précipitation du fer suffisante.

Concernant la saprolite seule, on a proposé, dans le document US-A-4 410 498, de la lixivier avec de l'acide sulfurique à pression atmosphérique, tout en ajoutant un réducteur maintenant le potentiel redox du bain à 400-600 mV.

Dans les documents US-B1-6 261 527 et US-B2-6 680 035, on propose de réaliser d'abord une lixiviation poussée à pression atmosphérique d'une fraction de limonite pour dissoudre le fer et le nickel, puis d'ajouter un agent de précipitation du fer pour réaliser la précipitation de la jarosite, et simultanément de réaliser la neutralisation de la pulpe au moyen de saprolite de manière à maintenir dans la phase liquide une concentration en H₂SO₄ libre de 5 à 15 ou 5 à 30 g/l. On obtient dans la solution finale une teneur en fer de moins de 3 g/l ou de moins de 10g/l selon la quantité d'agent précipitant le fer ajoutée.

Un moyen d'ajouter cet agent précipitant le fer, en l'occurrence des ions Na⁺, consiste à réaliser les mises en pulpe de la limonite et de la saprolite avec de l'eau de mer. Si cela constitue l'unique source d'agent précipitant le fer, on n'a accès qu'à la partie supérieure de la gamme de teneurs en fer de moins de 10 g/l précédemment citée.

Ce procédé, appelé JAL (Jarosite Atmospheric Leaching), a l'avantage de donner de bons résultats en termes de composition de la solution finale de lixiviation et de ne pas nécessiter d'appareillages très coûteux ou difficilement fiables (autoclaves) pour la mise en oeuvre de sa partie hydrométallurgique. Cependant, comme les précédents, il nécessite une extraction minière sélective ou un traitement préalable de séparation des fractions de limonite et de saprolite d'un minerai latéritique. Or, pour certains gisements, cette séparation est difficile à réaliser efficacement, soit du fait de la faible épaisseur des couches de limonite et de saprolite, soit du fait de la géométrie compliquée de leur interface. Dans certains gisements, il existe également des saprolites très ferrifères qu'on ne sait pas vraiment séparer des limonites en exploitation minière. Elles sont superposées à des saprolites peu ferrifères et plus magnésiennes. Enfin certains gisements ont été remobilisés (par exemple par glissement en masse vers des zones basses), et les divers types de minerais mélangés lors du déplacement ne peuvent plus être efficacement séparés.

Lorsqu'elle est possible, et ce n'est pas toujours le cas, cette séparation est donc difficile, et son coût grève sensiblement le prix de revient de l'extraction minière, de la minéralurgie et du traitement hydrométallurgique des minerais de nickel et de cobalt en vue de la récupération de ces métaux.

Le but de l'invention est de proposer un nouveau procédé de traitement hydrométallurgique d'un minerai latéritique de nickel et de cobalt, dont l'utilisation permet d'obtenir dans des conditions économiques satisfaisantes des concentrés intermédiaires ou des produits commerciaux du nickel et du cobalt d'une bonne pureté, et ce à partir d'une grande variété de minerais latéritiques.

A cet effet, l'invention a pour objet un procédé de traitement hydrométallurgique d'un minerai de nickel et de cobalt de type latéritique constitué par un mélange de limonite et de saprolite, caractérisé en ce qu'il consiste en les étapes suivantes :
- mettre en pulpe le mélange de limonite et de saprolite en présence d'un agent précipitant le fer, pour former une pulpe initiale, avec un taux de matières solides compris entre 10 et 40% en poids, de préférence entre 20 et 30%.
- réaliser une lixiviation de la pulpe initiale de limonite et de saprolite avec de l'acide sulfurique, à une température comprise entre 70°C et le point d'ébullition de la solution de préférence entre 90°C et l'ébullition, à pression atmosphérique;
- réaliser optionnellement une neutralisation de la pulpe issue de la lixiviation, de manière à obtenir un pH compris entre 2 et 3 ;
- et réaliser une séparation solide - liquide sur ladite pulpe, de préférence par décantation et lavage à contre-courant ou filtration, de manière à obtenir un résidu solide contenant du fer et principalement à l'état de jarosite, et une solution contenant des ions nickel et cobalt ;

Le ratio saprolite/limonite du mélange est de préférence compris entre 0,5 et 3 ;

Le temps de séjour de la pulpe lors de la lixiviation à l'acide sulfurique est, de préférence, compris entre 1 et 24h, de préférence 6 à 12h ;

La quantité d'acide sulfurique ajoutée lors de la lixiviation de la pulpe est, de préférence, telle que la concentration de la pulpe en acide sulfurique en fin de lixiviation est de 10 à 50 g/l, de préférence 20 à 40 g/l ;

Selon une variante de l'invention, le ratio saprolite/limonite du mélange autorise l'obtention, en fin d'une première étape de sa lixiviation, d'une concentration en acide sulfurique de 25 à 50 g/l, et de plus, on réalise séparément une mise en pulpe de saprolite avec un taux de matières solides compris entre 10 et 40% en poids, de préférence entre 20 et 30%. Ladite pulpe de saprolite est ajoutée à la pulpe de saprolite et de limonite, en cours de lixiviation, de manière à procéder à une deuxième étape de ladite lixiviation pendant une durée de 5 à 8h, à une température comprise entre 70°C et le point d'ébullition de la solution, de préférence entre 90° et l'ébullition, la concentration de la pulpe en acide sulfurique en fin de la deuxième étape de la lixiviation étant comprise entre 10 et 50 g/l, de préférence entre 20 et 40 g/l, avant de procéder à ladite neutralisation optionnelle et à ladite séparation solide/liquide.

Le temps de séjour de la pulpe initiale de limonite et saprolite, lors de la première étape de la lixiviation, est de préférence compris entre 1 h et 8h, de préférence 4 à 6h.

On réalise de préférence la lixiviation en présence d'un agent réducteur, tel que du SO₂, maintenant le potentiel électrochimique inférieur ou égal à 1000 mV par rapport à l'électrode normale à hydrogène.

La lixiviation de la pulpe initiale de limonite et de saprolite est, de préférence, réalisée en présence de germes de jarosite.

Le ratio germes/minerais est de préférence compris entre 0 et 2, mieux entre 0,2 et 0,6.

Lesdits germes sont, de préférence, constitués par la fraction solide obtenue lors d'une séparation solide/liquide d'une partie de la pulpe issue de ladite lixiviation, de préférence dans un décanteur.

Ladite fraction solide issue de ladite séparation a de préférence un taux de solides d'au moins 30%.

Lesdits germes peuvent résulter de la filtration de ladite fraction solide issue de ladite séparation.

L'agent précipitant le fer est, de préférence, choisi parmi Na⁺, K⁺ et NH₄⁺.

L'ajout d'agent précipitant le fer est réalisé, de préférence, au moins en partie par l'utilisation d'eau de mer pour ladite mise en pulpe du mélange de limonite et de saprolite et/ou pour ladite mise en pulpe de la saprolite.

L'invention a également pour objet un procédé de préparation de concentrés intermédiaires ou de produits commerciaux de nickel et/ou de cobalt à partir d'un minerai latéritique, caractérisé en ce que :
- on procède à un traitement hydrométallurgique dudit minerai latéritique comme exposé précédemment ;
- et on exécute sur ladite solution contenant les ions nickel et cobalt des opérations de purification et de récupération du nickel et/ou du cobalt sous forme de concentrés intermédiaires ou de produits commerciaux.

Comme on l'aura compris, une différence essentielle entre les procédés de l'art antérieur décrits dans US-B1-6 261 527 et US-B2-6 680 035 et le procédé selon l'invention est que, dans l'invention, il n'est pas nécessaire de réaliser au préalable une séparation du minerai latéritique entre une fraction de limonite à relativement haute teneur en fer et relativement basse teneur en magnésium et une fraction de saprolite à relativement basse teneur en fer et relativement haute teneur en magnésium. Une pulpe d'un minerai latéritique contenant une fraction élevée de saprolite peut être directement traitée par lixiviation atmosphérique à l'acide sulfurique, donc sans qu'il soit nécessaire d'avoir recours à des températures et à des pressions élevées lors de la lixiviation. Ainsi, le prix de revient global du traitement d'un tel minerai peut être sensiblement abaissé, pour un rendement de récupération du nickel qui demeure compétitif, voire est équivalent à ce que les procédés de l'art antérieur cités permettent d'obtenir. Cela permet de traiter dans des conditions économiques satisfaisantes des variétés de minerais latéritiques pour lesquelles des opérations de séparation efficaces en limonite et saprolite seraient trop difficiles et/ou trop coûteuses.

Si, par ailleurs, on dispose d'une source de saprolite, on peut améliorer les performances du procédé, en ajoutant une pulpe de saprolite à la pulpe initiale au cours de sa lixiviation. Le seul réacteur supplémentaire nécessaire à la mise en oeuvre de cette variante est celui dans lequel la saprolite est mise en pulpe, et est donc de conception très simple. L'augmentation du coût du procédé, occasionnée par cette variante, demeure donc très raisonnable, d'autant qu'elle peut permettre de raccourcir la durée totale de la lixiviation. La durée globale de la mise en oeuvre du procédé peut donc rester comparable à celle de sa version de base.

De préférence, on réalise la lixiviation de la pulpe initiale de limonite et saprolite en présence de germes contenant de la jarosite. Ces germes sont, de préférence, obtenus au cours même de l'exécution du procédé, par exemple au moyen d'une séparation solide/liquide effectuée sur une portion de la pulpe résultant de la lixiviation.

L'exécution des mises en pulpe avec de l'eau de mer permet d'introduire à peu de frais un agent précipitant le fer, en l'occurrence des ions Na⁺. Grâce à lui, le fer présent dans la solution après attaque des minerais par l'acide sulfurique va précipiter dans la jarosite. La quantité d'ions Na⁺ apportée par l'eau de mer dans les conditions prescrites pour les mises en pulpe est suffisante pour obtenir une précipitation de fer qui laisse dans la solution finale une quantité de fer dissous qui sera le plus généralement considérée comme au moins acceptable. Si on désire obtenir une solution finale contenant très peu de fer, on peut spécifiquement rajouter aux pulpes un ou des agents précipitant le fer (composés renfermant des ions Na⁺, K⁺, NH₄⁺...), ou réaliser les mises en pulpe avec de l'eau douce additivée par un ou plusieurs tels agents dans une quantité adéquate. Une neutralisation de la pulpe résultant de la lixiviation, de manière à obtenir un pH de 2 à 3, est également favorable à l'obtention d'une très faible teneur en fer de la solution finale.

L'invention sera mieux comprise à la lecture de la description qui suit donnée en référence aux figures annexées suivantes :
- la figure 1 qui schématise une première version du procédé selon l'invention ;
- la figure 2 qui schématise une seconde version du procédé selon l'invention ;
- la figure 3 qui montre l'évolution de la teneur en fer de la fraction liquide de la pulpe lors de trois essais de lixiviation ; et
- la figure 4 qui montre l'évolution de la teneur en H₂SO₄ libre de la fraction liquide de la pulpe lors de ces mêmes essais.

On précise tout d'abord que dans le texte qui suit, les définitions suivantes doivent être appliquées à certains termes dont la signification exacte n'est pas toujours très homogène dans la littérature technique :
- limonite : fraction de minerai renfermant 50 à 70% de Fe₂O₃ et au maximum 5% de MgO ;
- saprolite : fraction de minerai renfermant 7 à 27% de Fe₂O₃ et au moins 10% de MgO.

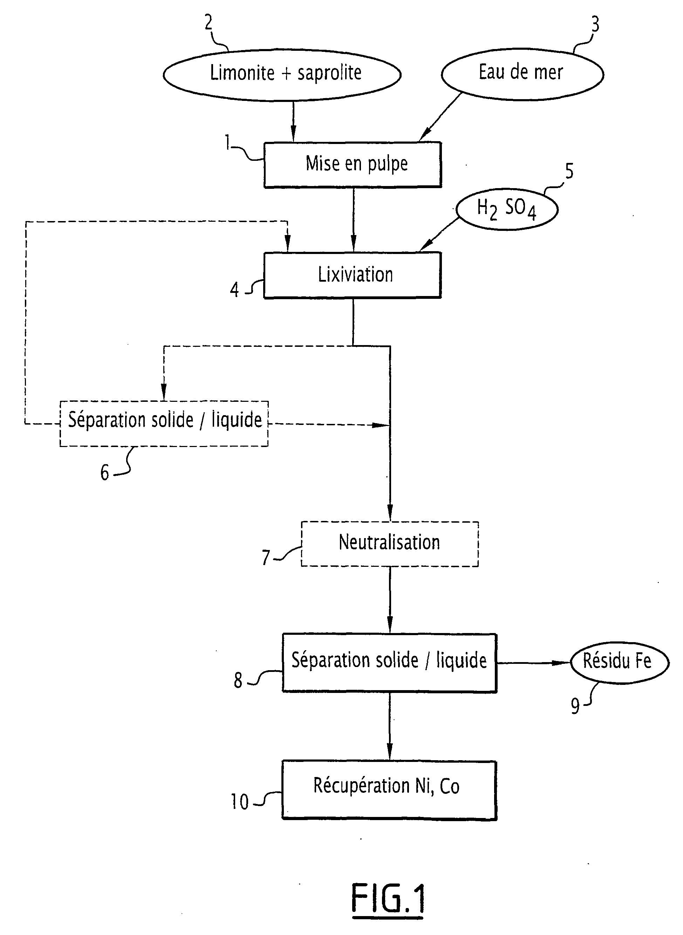

La version de base du procédé selon l'invention, qui sera désignée dans la suite du texte par « version 1 », est schématisée sur la figure 1.

Dans une première étape, on réalise la mise en pulpe d'un mélange 2 de limonite et de saprolite avec de l'eau de mer 3. Ce mélange 2 de limonite et de saprolite est optimalement un minerai de nickel latéritique dont on n'a pas séparé les fractions à haute et basse teneur en magnésium. Le ratio saprolite/limonite est de préférence compris entre 0,5 et 3. Cette mise en pulpe permet d'obtenir un taux de matières solides compris entre 10 et 40% en poids, de préférence entre 20 et 30%.

Dans une deuxième étape 4, on réalise une lixiviation à l'acide sulfurique 5 de la pulpe obtenue dans la première étape 1. Cette lixiviation 4 est effectuée à la pression atmosphérique et à une température comprise entre 70°C et le point d'ébullition de la solution, de préférence entre 90°C et le point d'ébullition, une température élevée favorisant la dissolution des éléments à lixivier. Elle n'utilise donc pas forcément d'appareils complexes, coûteux et de fiabilité incertaine pour son exécution, tels que les autoclaves utilisés habituellement pour les lixiviations à haute température et sous pression, nécessités par certains autres procédés de traitement de minerais de nickel. Le temps de séjour de la pulpe lors de la lixiviation 4 est généralement compris entre 1 h et 24h, de préférence entre 6 et 12h. Il est à optimiser en fonction des divers paramètres techniques et économiques du procédé, pour concilier une dissolution du nickel aussi complète que possible et une durée du traitement pas trop élevée. La quantité d'acide sulfurique ajoutée est de préférence, celle nécessaire pour qu'en fin d'opération, la concentration en acide sulfurique soit de 10 à 50 g/l, de préférence de 20 à 40g/l de manière à obtenir un bon compromis entre un rendement de la lixiviation du nickel élevé et une teneur en fer soluble faible dans la solution de lixiviation. Egalement, comme il est connu dans d'autres procédés, on peut imposer à la solution un potentiel électrochimique inférieur ou égal à 1000 mV par rapport à l'électrode normale à hydrogène. En effet, dans les minerais latéritiques, une fraction prépondérante du cobalt est incluse dans des composés oxydés du manganèse, du type asbolane, et le cobalt est libéré lorsque le manganèse est solubilisé par réduction de la valence IV à la valence II. Mais si on ne désire pas spécialement optimiser la lixiviation du cobalt, cette imposition d'un potentiel électrochimique n'est pas nécessaire. Cette imposition est obtenue par ajout d'un agent réducteur, par exemple par une insufflation de SO₂. On obtient la précipitation d'une fraction solide contenant de la jarosite, qui renferme elle-même la plus grande partie du fer initialement présent dans le mélange 2, ce fer étant indésirable à haute teneur dans la solution finale sur laquelle auront lieu les opérations de récupération du nickel et/ou du cobalt.

De préférence, mais pas obligatoirement (d'où la représentation en pointillés de cette opération sur la figure 1), la lixiviation 4 est effectuée après un ajout à la pulpe d'un germe de résidu d'attaque contenant de la jarosite, afin de favoriser une initiation rapide de la précipitation de la jarosite dans la fraction solide. Le ratio en poids germe/minerai est de préférence 0 à 2, mieux 0,2 à 0,6, pour obtenir l'effet recherché dans de bonnes conditions économiques. Ce ratio est un paramètre sur lequel on peut jouer pour optimiser finement le procédé de l'invention, en fonction de la composition précise du minerai de départ. Un moyen privilégié d'obtenir ce germe consiste, comme schématisé sur la figure 1, à réaliser une séparation solide/liquide 6 sur une fraction de la pulpe issue de la lixiviation 4, de préférence dans un décanteur, et à renvoyer la sous-verse dans le réacteur de lixiviation. Cette sous-verse, de préférence, a une teneur en solide d'au moins 30% en poids, l'épaississement ayant intérêt à être aussi élevé que possible pour limiter le recyclage de liquide vers la lixiviation. Une filtration de la pulpe de la sous-verse permettrait d'obtenir une teneur en solide très élevée.

Puis, la pulpe issue de la lixiviation 4, éventuellement additivée par la surverse liquide de la séparation 6, subit optionnellement une étape de neutralisation 7 au moyen d'un agent neutralisant tel que du calcaire finement broyé, pour porter son pH final entre 2 et 3, de préférence à environ 2,5, de manière à minimiser la teneur en fer soluble et éviter une co-précipitation d'une partie du cobalt et du nickel.

Enfin, une séparation solide/liquide 8 de la pulpe est effectuée, de préférence par décantation et lavage à contre-courant ou par filtration. On obtient ainsi un résidu 9 sensiblement exempt de cobalt et nickel solubles et renfermant, notamment, l'essentiel du fer initialement présent dans le minerai de départ, et une solution renfermant les ions nickel et cobalt solubilisés et dont la teneur en fer, si on ne procède pas à la neutralisation 7 optionnelle, est typiquement de 4 à 30 g/l environ, de préférence de 4 à 15 g/l. La neutralisation 7 peut permettre d'abaisser cette teneur en fer à moins de 1 g/l.

On peut alors appliquer à cette solution les procédés classiques de récupération 10 du nickel et/ou du cobalt, en vue d'obtenir isolément l'un au moins de ces éléments sous forme de concentré intermédiaire ou d'un produit commercial de type habituel. Les procédés par voie sulfate sont particulièrement indiqués. Comme ils sont classiques et que les étapes antérieures du procédé selon l'invention n'interfèrent pas de manière particulière avec eux, il n'est pas nécessaire de les décrire plus en détail ici.

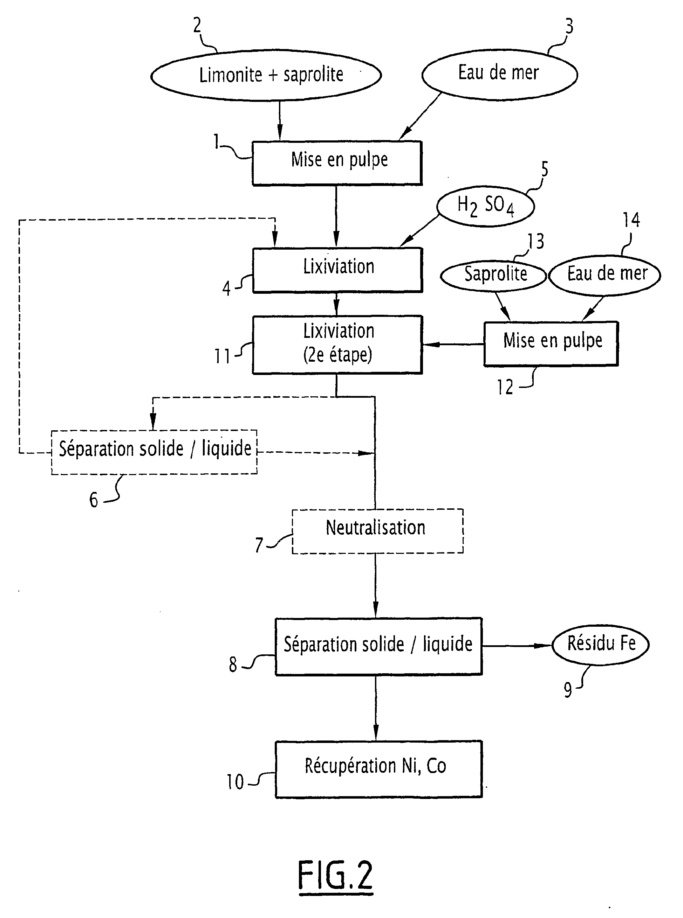

La figure 2 schématise une variante du procédé selon l'invention que l'on désignera dans la suite du texte par « version 2 ». Elle se différencie de la version 1 essentiellement en ce que la lixiviation s'effectue en deux étapes, la deuxième étape étant initiée par un ajout de pulpe de saprolite au cours de la lixiviation de la pulpe initiale.

La première étape 1 de mise en pulpe d'un mélange de limonite et saprolite avec de l'eau de mer 3 est effectuée, comme dans la version 1, en obtenant un taux de matières solides dans la pulpe de 10 à 40%, de préférence 20 à 30%.

Le critère pour la détermination du ratio saprolite/limonite est, toutefois, différent : ici on impose un ratio tel qu'il autorise en fin de la première étape de lixiviation 4 la présence d'une concentration en acide sulfurique relativement élevée, de 25 à 50g/l, fournissant les rendements de lixiviation du nickel et du cobalt.

On procède ensuite à une lixiviation de la pulpe en deux étapes 4, 11. La première étape 4 est comparable à la lixiviation 4 en une seule étape de la version 1, en ce qu'elle est effectuée également à pression atmosphérique et à une température comprise entre 70°C et le point d'ébullition de la solution, de préférence entre 90°C et l'ébullition, en imposant un potentiel inférieur ou égal à 1000 mV par rapport à l'électrode normale à hydrogène si on désire optimiser la lixiviation du cobalt.

La quantité d'acide sulfurique 5 ajoutée est, cette fois, telle qu'après la deuxième étape 11 de la lixiviation qui sera décrite plus loin, la concentration en acide sulfurique soit de 10 à 50 g/l, de préférence 20 à 40 g/l.

Cette première étape 4 de la lixiviation dure généralement de 1 à 8h, de préférence 4 à 6h.

Parallèlement à l'exécution de la mise en pulpe 1 du mélange limonite/saprolite et de la première étape 4 de la lixiviation, on réalise la mise en pulpe 12 d'une fraction de saprolite 13 avec de l'eau de mer 14, de manière à obtenir un taux de matières solides dans la pulpe de 10 à 40%, de préférence 20 à 30%.

Puis, lorsque la première étape 4 de la lixiviation a progressé au point que la teneur en acide sulfurique de la pulpe a atteint 25 à 50g/l, on procède à l'ajout, dans la pulpe lixiviée, de la pulpe de saprolite résultant de la mise en pulpe 12, sans qu'un ajout supplémentaire d'acide sulfurique soit nécessaire à ce stade, sauf pour corriger une éventuelle déviation accidentelle du procédé. Une deuxième étape 11 de la lixiviation débute alors, toujours exécutée à pression atmosphérique et à une température comprise entre 70°C et le point d'ébullition de la solution, de préférence entre 90°C et l'ébullition. Cette étape 11 dure de 5 à 8h. Elle permet d'obtenir une pulpe lixiviée finale, dont la fraction solide contient de la jarosite renfermant la plus grande partie du fer initialement présent dans le mélange limonite/saprolite initial 2 et la saprolite ajoutée 13.

Puis cette pulpe subit les mêmes opérations de neutralisation 7 optionnelle, de séparation solide/liquide 8 et de récupération du nickel et/ou du cobalt 9 que dans la version 1.

De même que dans la version 1, de préférence on exécute la lixiviation 4, 11 en présence d'un germe contenant de la jarosite. Il est ajouté à la pulpe préalablement à la première étape 4 de la lixiviation, là encore avec un ratio en poids germe/minerai préférentiel de 0 à 2, mieux 0,2 à 0,6. Avantageusement, ce germe est obtenu par une séparation solide/liquide 6 effectuée sur une fraction de la pulpe issue de la deuxième étape 11 de la lixiviation. Là encore, la sous-verse résultant de cette séparation 6 a de préférence une teneur en solides d'au moins 30%, et c'est elle (ou la pulpe résultant de sa filtration) qui est envoyée dans le réacteur de lixiviation.

La surverse liquide résultant de cette séparation 6 est rajoutée à la pulpe issue de la deuxième étape 11 de la lixiviation, en vue soit de la neutralisation 7 si elle a lieu, soit directement de la séparation solide/liquide 8.

La version 2 permet, par rapport à la version 1, d'augmenter les rendements de lixiviation du nickel et du cobalt. C'est également le but de l'addition à la pulpe initiale de limonite et saprolite, avant le début de sa lixiviation 4, des germes contenant de la jarosite. Cette addition permet d'accélérer la cinétique de précipitation de la jarosite, et de réduire la quantité d'acide sulfurique nécessaire pour l'obtention des rendements de lixiviation visés, pour une teneur en fer de la solution finale donnée. En effet, la précipitation de la jarosite provoque un relargage d'une quantité d'acide qui est ainsi disponible pour dissoudre davantage le nickel et le cobalt.

On va à présent décrire le déroulement et les résultats d'essais de laboratoire portant sur différentes variantes du procédé selon l'invention.

Dans une première série d'essais (référencés 1 à 5), on a expérimenté les versions 1 et 2 du procédé selon l'invention, mais sans avoir recours à l'introduction délibérée de germes contenant de la jarosite lors de la lixiviation.

Les essais ont été réalisés sur des minerais typiques issus de Nouvelle-Calédonie et dont les caractéristiques principales sont données dans le tableau 1.

Leurs principales conditions opératoires sont résumées dans le tableau 2.

**Tableau 1 : composition des minerais des essais.**

| Mineral | Ni% | Co% | Fe% | Mg% | Si% | Al% | Mn% | Cr% |
|---|---|---|---|---|---|---|---|---|
| limonite | 1,29 | 0,29 | 41,9 | 2,34 | 3,8 | 2,51 | 1,63 | 2,12 |
| saprolite | 1,68 | 0,03 | 11,4 | 15,3 | 20,3 | 0,27 | 0,19 | 0,48 |

**Tableau 2 : conditions opératoires de la première série d'essais**

| Essai | procédé | ratio limonite/saprolite approximatif | H₂SO₄ |
|---|---|---|---|
| | | | (g/g de minerai sec) |
| 1 | version 1 | 1 : 1 | 0,77 |
| 2 | version 1 | 1 : 1 | 0,80 |
| 3 | version 1 | 1 : 1 | 0,87 |
| 4 | version 1 | 1 : 2 | 0,89 |
| 5 | version 2 | 1 : 2 | 0,83 |

Concernant l'essai 5, l'acidité est considérée par rapport à la quantité totale de minerais ajoutée dans les deux étapes de la lixiviation. On se reportera à la description détaillée de l'essai pour plus d'explications.

### Essai n° 1 : version 1 - Lixiviation de limonite et saprolite à ratio 1 : 1.

269 g sec de limonite et 281 g sec de saprolite en mélange sont ajoutés à 1620 ml d'eau de mer contenant 11 g/l Na dans un réacteur de 2 litres à double enveloppe thermostatée équipé d'un système de reflux. 443 g d'acide sulfurique 96% sont ajoutés lentement au mélange de minerais en pulpe, soit 0,77 g de H₂SO₄ / g sec de minerais. Le réacteur est équipé d'un système de bullage de dioxyde de soufre et d'une mesure de potentiel redox utilisant une électrode Ag/AgCl. Il est mis en rotation à 318 tr/min pour obtenir une agitation de la pulpe.

Le milieu réactionnel est porté à une température entre 95°C et l'ébullition pendant toute la durée de l'essai. Après 30 minutes de réaction, le potentiel de la pulpe est contrôlé à environ 650 mV Ag/AgCl au maximum par ajout de SO₂ pendant environ 5h. L'évolution du potentiel est :

| | | | | | |
|---|---|---|---|---|---|
| Temps | 0h | 0.3 h | 0.6 h | 5.8h | 24 h |
| Potentiel (Ag/AgCl) | 1016mV | 977mV | 650mV | 570Mv | 523mV |

Un prélèvement réalisé à 5,8 h montre que le lixiviat contient 3,8 g/l Ni, 0,51 g/l Co et 34 g/l Fe, soit approximativement des rendements de lixiviation de 70% pour Ni, 92% pour Co et une précipitation de 28% pour Fe.

A la fin de l'essai, le mélange réactionnel, qui constitue 1930 ml de pulpe, est ensuite filtré ; on récupère 1300 ml de filtrat à 4,7 g/l Ni et 0,51 g/l Co, 7,7 g/l Fe et 39 g/l d'H₂SO₄. Le gâteau est lavé sur filtre et séché à poids constant. On récupère 551 g sec de résidu, soit 1,00 g sec de résidu / g sec de minerais.

Les rendements de lixiviation sont : 86,6% pour Ni, 92,4% pour Co et 8% pour Fe.

### Essai n° 2 : version 1 - Lixiviation de limonite et saprolite à ratio 1 : 1.

333 g sec de limonite et 333 g sec de saprolite en mélange sont ajoutés à 2000 ml d'eau de mer contenant 11 g/l Na dans le même réacteur que précédemment, agité dans les mêmes conditions. 557 g d'acide sulfurique 96% sont ajoutés lentement au mélange de minerai en pulpe, soit 0,80 g d'H₂SO₄ / g sec de minerais.

Le milieu réactionnel est porté à une température entre 95°C et l'ébullition pendant toute la durée de l'essai. Après 15 minutes, le potentiel de la pulpe est contrôlé à environ 650 mV Ag/AgCl au maximum par ajout de SO₂ pendant environ 5 heures. L'évolution du potentiel est :

| | | | | | | | |
|---|---|---|---|---|---|---|---|
| Temps | 0h | 0.5 h | 1 h | 2h | 8h | 16 h | 28 h |
| Potentiel (Ag/AgCl) | 1000 mV | 830 mV | 704 mV | 589 mV | 579 mV | 601 mV | 528 mV |

Le mélange réactionnel final, qui constitue 1300 ml de pulpe, est filtré ; on récupère 940 ml de filtrat à 4,8 g/l Ni et 0,55 g/l Co, 27,4 g/l Fe et 25 g/l d'H₂SO₄. Le gâteau est lavé sur filtre et séché à poids constant. On récupère 356 g sec de résidu.

Les rendements de lixiviation sont : 87,3% pour Ni, 95,3% pour Co et 26% pour Fe.

### Essai n° 3 : version 1 - Lixiviation de limonite et saprolite à ratio 1 : 1.

269 g sec de limonite et 281 g sec de saprolite en mélange sont ajoutés à 1620 ml d'eau de mer contenant 11 g/l Na dans le même réacteur que précédemment, agité dans les mêmes conditions. 500 g d'acide sulfurique 96% sont ajoutés lentement au mélange de minerai en pulpe, soit 0,87 g d'H₂SO₄/g sec de minerais.

Le milieu réactionnel est porté à une température entre 95°C et l'ébullition pendant toute la durée de l'essai. Après 15 minutes de réaction, le potentiel de la pulpe est contrôlé à environ 650 mV Ag/AgCl au maximum par ajout de SO₂ pendant environ 5 heures. L'évolution du potentiel est :

| | | | |
|---|---|---|---|
| Temps | 0.8 h | 4.5 h | 23.3 h |
| Potentiel (Ag/Ag Cl) | 645 mV | 543 mV | 528 mV |

Le mélange réactionnel, qui constitue 1920 ml de pulpe, est filtré ; on récupère 1355 ml de filtrat à 4,6 g/l Ni et 0,46 g/l Co, 21,4 g/l Fe et 36 g/l d'H₂SO₄. Le gâteau est lavé sur filtre et séché à poids constant. On récupère 475 g sec de résidu, soit 0,86 g sec de résidu / g sec de minerais.

Les rendements de lixiviation sont : 93,6% pour Ni, 96,7% pour Co et 24% pour Fe.

### Essai n°4 : version 1 - Lixiviation de limonite et saprolite à ratio 1_ : 2.

135 g sec de latérite et 270 g sec de saprolite en mélange sont ajoutés à 1215 ml d'eau de mer contenant 11 g/l Na dans le même réacteur que précédemment, agité dans les mêmes conditions. 375 g d'acide sulfurique 96% sont ajoutés lentement au mélange de minerai en pulpe, soit 0,89 g d'H₂SO₄ / g sec de minerais.

Le milieu réactionnel est porté à une température entre 95°C et l'ébullition pendant toute la durée de l'essai. Après 15 minutes de réaction, le potentiel de la pulpe est contrôlé à environ 650 mV Ag/AgCl au maximum par ajout de SO₂ pendant environ 5 heures. L'évolution du potentiel est :

| | | | |
|---|---|---|---|
| Temps | 0 h | 1.5 h | 17.8 h |
| Potentiel (Ag/AgCl) | 943 mV | 586 mV | 575 mV |

Le mélange réactionnel qui constitue 1500 ml de pulpe, est filtré ; on récupère 1080 ml de filtrat à 4,3 g/l Ni et 0,33 g/l Fe et 30 g/l d'H₂SO₄. Le gâteau est lavé sur filtre et séché à poids constant. On récupère 288 g sec de résidu, soit 0,71 g sec de résidu / g sec de minerais.

Les rendements de lixiviation sont : 89,0% pour Ni, 93,9% pour Co et 34% pour Fe.

### Essai n°5 : version 2 : Lixiviation de limonite et saprolite à ratio 1 : 2.

### 1^{ère} étape :

141 g sec de limonite et 139 g sec de saprolite en mélange sont ajoutés à 810 ml d'eau de mer contenant 11 g/l Na dans le même réacteur que précédemment, agité dans les mêmes conditions. 363 g d'acide sulfurique 96% sont ajoutés lentement au mélange de minerai en pulpe, soit 1,24 g d'H₂SO₄ / g sec de minerais par rapport à la quantité de minerais initiale.

Le milieu réactionnel est porté à une température entre 95°C et l'ébullition pendant toute la durée de l'essai. Après 15 minutes de réaction, le potentiel de la pulpe est contrôlé à environ 650 mV Ag/AgCl au maximum par ajout de SO₂ pendant environ 5 heures. L'évolution du potentiel est :

| | | | | | | |
|---|---|---|---|---|---|---|
| Temps | 0 h | 0.5 h | 0.7 h | 0.9 h | 1.5 h | 5.7 h |
| Potentiel (Ag/AgCl) | 1026 mV | 1090 mV | 880 mV | 792 mV | 623 mV | 629 mV |

La durée de la première étape est de 5,7 h.

Le mélange réactionnel qui constitue 1092 ml de pulpe est :
- soit filtré ; on récupère 900 ml de filtrat à 4,2 g/l Ni et 0,43 g/l Co, 71 g/l Fe et 30 g/l dH₂SO₄. Le gâteau est lavé sur filtre et séché à poids constant. On récupère 86 g sec de résidu, soit 0,31 g sec de résidu / g sec de minerais. On estime alors les performances de la première étape. Les rendements de lixiviation sont : 97,7% pour Ni, 97,9% pour Co et 94% pour Fe.
- soit utilisé dans la deuxième étape.

### 2^{ème} étape :

A t=5,7 h, le mélange réactionnel est neutralisé par ajout de 139 g sec de saprolite mise en pulpe dans 405 ml d'eau de mer. Le chauffage du milieu est maintenu jusqu'à l'arrêt de l'essai à t=23,8h. Aucune quantité supplémentaire d'acide n'est ajoutée, ce qui fait que si on raisonne sur la quantité totale de minerais ajoutée lors des deux étapes, la quantité d'acide introduite en début d'essai est de 0,83g / g sec de minerais.

Le potentiel redox final est de 574 mV Ag/AgCl.

Le mélange réactionnel, qui constitue 1590 ml de pulpe, est filtré ; on récupère 1080 ml de filtrat à 5,7g/l Ni, 0,40 g/l Co, 4,9 g/l Fe et 25 g/l d'H₂SO₄. Le gâteau est lavé sur filtre et séché à poids constant. On récupère 400 g sec de résidu, soit 0,95 g sec de résidu / g sec de minerais.

Les rendements de lixiviation sont : 93,8% pour Ni, 95,5% pour Co et 8% pour Fe.

Si on réalise un suivi de l'évolution des diverses réactions en jeu lors de la lixiviation de l'essai n°2 on parvient aux constatations suivantes sur le déroulement d'une lixiviation.

Le magnésium est très rapidement lixivié (90% l'est dans la première heure), et consomme une partie importante (40%) de l'acide introduit au départ. La quantité lixiviée augmente peu par la suite (rendement final 95%).

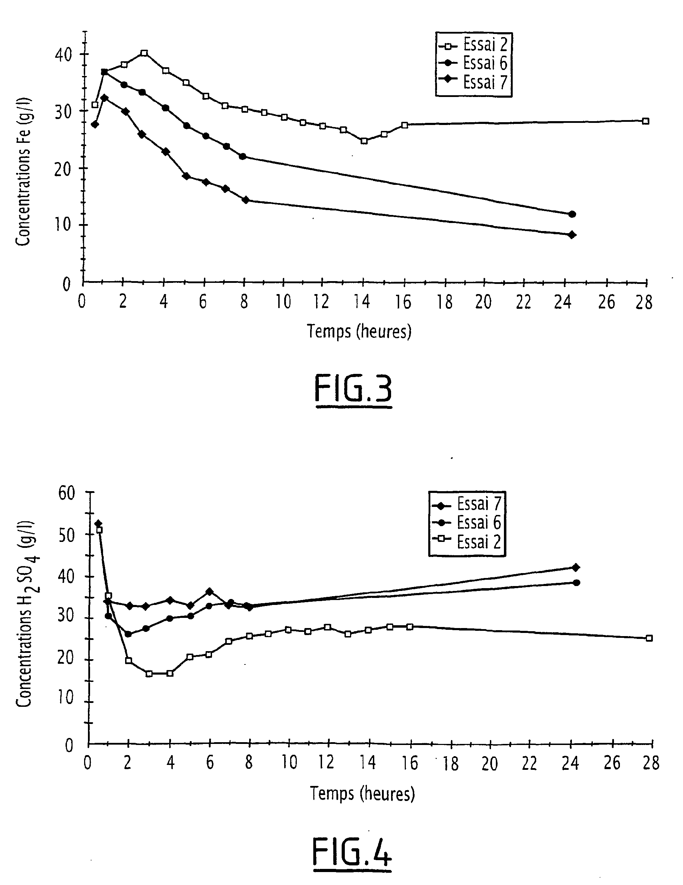

Le fer est lixivié rapidement, mais atteint un rendement de lixiviation maximal de 48% après 3 h, soit une consommation de l'acide introduit de 33%. Ce rendement diminue par la suite, du fait de la précipitation du fer dans la jarosite, jusqu'à la valeur finale 26%, atteinte après environ 15 h. La courbe montrant l'évolution de la teneur en fer de la solution est visible sur la figure 3.

73% du nickel sont lixiviés en 1 h, puis la lixiviation se poursuit lentement pour atteindre le rendement final de 87% après 16h.

Le cobalt est lixivié très rapidement (90% en 1 h) dès l'ajout du SO₂. Le rendement maximal de 95% est atteint après 10h environ.

La teneur en H₂SO₄ après 1 h est de 35 g/l et descend jusqu'à 17 g/l après 3h. Puis l'acidité augmente progressivement, au fil de la précipitation de la jarosite. Celle-ci relargue de l'acide, qui devient disponible pour poursuivre l'attaque du minerai, ce qui se traduit par la poursuite progressive de la lixiviation du nickel. La valeur maximale de la teneur en H₂SO₄ est de 28 g/l, atteinte après 15h environ. Elle redescend ensuite progressivement jusqu'à 25 g/l après 28h. La courbe est visible sur la figure 4.

### Essais de référence 1 et 2

On a également réalisé des essais de référence en utilisant le procédé appelé JAL (Jarosite Atmospheric Leaching), qui fait l'objet des documents US-B1-6 261 527 et US-B2-6 680 035.

Selon ce procédé, dans une première étape on réalise une lixiviation de la seule limonite, mise en pulpe avec de l'eau de mer, à pression atmosphérique, en contrôlant le potentiel par ajout d'un réducteur ; puis dans une deuxième étape, on réalise une neutralisation de la pulpe par de la saprolite seule.

Dans ces essais de référence, on a ajouté 0,80 g de H₂SO₄ par g de minerai (total limonite + saprolite) et on a utilisé un ratio limonite / saprolite de 1 :1. De ces points de vue, on s'est placé dans des conditions comparables à celles des essais 1 et 2 selon l'invention. L'essai de référence 1 a été poursuivi pendant 13,3 h, contre 24 h pour l'essai de référence 2.

Les résultats des essais de référence 1 et 2 et des essais 1 à 5 selon l'invention sont résumés dans le tableau 3.

**Tableau 3 : résultats des essais 1 à 5 et des essais de référence 1 et 2**

| **N° d'essai** | **Procédé testé** | **Nombre d'étapes de lixiviation** | **Proportion limonite : saprolite** | **Etapes** | **Minerais traités (en unités de masse)** | | **Equivalent d'acide/minerais** | **Temps de séjour de chaque étape et temps de séjour total de l'essai (h)** | **Température (°C)** | **Rendements globaux** | | | |
|---|---|---|---|---|---|---|---|---|---|---|---|---|---|
| | | | | | **Limonite** | **saprolite** | | | | **Rdt Ni*** | **Rdt Co** | **Acidité finale** | **Fe résiduel** |
| Ref 1 | JAL | | | n°1 | 1 | | 1.60 g/g | 5.3 h | 100 °C | 99.5% | 99.3 % | 66 g/l | 120 g/l |
| | | 2 | 1 : 1 | n°2 | | 1 | =0.80 g/g global | +8h= 13.3h | 100 °C | 91.7% | 96.9% | 28 g/l | 7.5 g/l |
| Ref 2 | JAL | | | n°1 | 1 | | 1.60 g/g | 5.8 h | 100 °C | 99.5% | 99.0% | 68 g/l | 143 g/l |
| | | 2 | 1 : 1 | n°2 | | 1 | =0.80 g/g global | +18.2h=24h | 100°C | 93.1% | 92.7% | 34 g/l | 5.4 g/l |
| n°1 | Invention version 1 | | | | | | | | 100 °C | | | | |
| | | 1 | 1 : 1 | - | 1 | 1 | 0.77 g/g global | 24 h | | 86.6% | 92.4% | 39 g/l | 7.7 g/l |
| n°2 | Invention, version 1 | | | | | | | | 100 °C | | | | |
| | | 1 | 1 : 1 | - | 1 | 1 | 0.80 g/g global | 28 h | | 87.3% | 95.3% | 25 g/l | 27.4 g/l |
| n°3 | Invention, version 1 | | | | | | | | 100 °C | | | | |
| | | 1 | 1 : 1 | - | 1 | 1 | 0.87 g/g global | 23.3 h | | 93.6% | 96.7% | 36 g/l | 21.4 g/l |
| n°4 | Invention, version 1 | | | | | | | | 100 °C | | | | |
| | | 1 | 1 : 2 | - | 1 | 2 | 0.89 glg global | 17.8 h | | 89.0% | 93.9% | 30 g/l | 23.6 g/l |
| n°5 | Invention, version 2 | | | n°1 | 1 | 1 | 1.25 g/g | 5.7 h | 100 °C | 97.7% | 97.9% | 30 g/l | 71 g/l |
| | | 2 | 1 : 2 | n°2 | | 1 | =0.83 g/g global | +18.1h=23.8h | | 93.8% | 95.5% | 25 g/l | 4.9 g/l |

| | | | | | | | | | | | | | |
|---|---|---|---|---|---|---|---|---|---|---|---|---|---|
| * Pour les essais Ref 1, Ref 2 et n°5, le rendement Ni indiqué à l'étape n°2 est le rendement global de l'essai, calculé sur la totalité des minerais introduits lors des deux étapes. | | | | | | | | | | | | | |

Dans tous les cas, la lixiviation du cobalt atteint de bons rendements, de l'ordre de 92 - 98%. Le procédé selon l'invention donne des résultats très comparables à ceux du procédé JAL de référence. Cela s'explique par le fait que la lixiviation du cobalt dépend très fortement de l'introduction d'un réducteur du manganèse, auquel le cobalt est associé. C'est le SO₂ qui joue ici ce rôle, aussi bien dans les essais de référence que dans les essais selon l'invention.

Concernant la lixiviation du nickel, les rendements sont assez comparables, de l'ordre de 90% pour tous les essais. La version 1 du procédé selon l'invention, lorsque le ratio limonite/saprolite est de 1 : 1, procure un rendement de l'ordre de 87% avec une acidité d'environ 0,80 g/g et donne donc un résultat un peu inférieur à ceux des essais de référence, à acidité égale. Avec une acidité plus élevée, de l'ordre de 0,90 g/g on retrouve un rendement comparable à celui des références. Si on augmente le ratio limonite/saprolite à 1 : 2, à acidité égale on abaisse légèrement le rendement de lixiviation du nickel dans le cas de la version 1 du procédé selon l'invention.

Mais si on applique la version 2 du procédé selon l'invention avec un ratio limonite/saprolite de 1 : 2, même avec une acidité de seulement 0,80 g/g environ, on obtient un rendement de lixiviation du nickel très élevé, de l'ordre de 94%.

L'invention permet donc, dans ses versions 1 et, surtout, 2, de retrouver des résultats de lixiviation du nickel peu dégradés ou tout à fait comparables à ceux obtenus par le procédé JAL classique, à composition des minerais traités et quantité d'acide consommée équivalentes.

Remarquablement, ces résultats sont obtenus sans qu'une séparation préalable de la limonite et de la saprolite soit nécessaire pour réaliser la première ou l'unique étape de lixiviation. Ceci constitue un important avantage économique par rapport au procédé JAL en général pour les gisements latéritiques ayant une proportion notable de saprolite, et en particulier pour ceux où l'extraction minière sélective ou la séparation par minéralurgie des fractions de limonite et de saprolite n'est pas possible ou trop coûteuse.

Concernant la présence de fer résiduel dans la solution finale, les résultats obtenus avec le procédé selon l'invention dans les essais 1 à 5 semblent relativement erratiques à première vue. La teneur en fer tend à augmenter avec la quantité d'acide introduite (entre 5 et 8 g/l de Fe pour 0,77 à 0,83 g/g de H₂SO₄ introduits, entre 21 et 24 g/l de Fe pour 0,87 à 0,89 g/g de H₂SO₄ introduits), mais on remarque que l'essai 2 (0,80 g/g de H₂SO₄) a conduit a une teneur en Fe assez élevée de 27,4 g/l, malgré une quantité de H₂SO₄ de seulement 0 ,80 g/g.

Une explication à cette constatation est que la cinétique de précipitation de la jarosite s'avère très dépendante de la présence ou non de germes contenant de la jarosite au début de la lixiviation. Or, il se trouve que le réacteur avait été très soigneusement nettoyé avant le début de l'essai 2. De tels germes de jarosite étaient donc complètement absents du milieu initial, alors que ce n'était très probablement pas le cas lors des autres essais selon l'invention, conformément à ce qui se passerait le plus fréquemment dans une pratique industrielle.

Sur la base de cette constatation, on a donc effectué de nouveaux essais pour étudier l'influence d'un ajout délibéré de germes de jarosite dans la pulpe avant la lixiviation.

Ces essais ont porté sur la version 1 du procédé selon l'invention, où la lixiviation s'effectue en une seule étape. Mais leurs résultats sont transposables à la version 2 comportant une lixiviation en deux étapes, avec ajout intermédiaire de saprolite.

On a réalisé deux essais numérotés 6 et 7, dans des conditions comparables à celles de l'essai 2 précédent du point de vue de la version du procédé employée (version 1), du ratio limonite/saprolite (1 : 1) et de la quantité de H₂SO₄ ajoutée (0,80 g environ par g de minerai sec). A la différence de l'essai 2, on a rajouté à la pulpe, avant le début de la lixiviation, des germes de résidu de jarosite, dans un ratio germes/minerai sec de 1 / 6 (essai 6) ou 1 / 2 (essai 7). On a également augmenté la vitesse de rotation du réacteur pour favoriser la dispersion des germes. Les conditions des essais 2 (pour rappel), 6 et 7 sont résumées dans le tableau 4.

| Essai | Procédé | Ratio limonite/saprolite approximatif | H₂SO₄ ajouté (g/g de minerai sec) | Germes/minerai sec | Agitation tr/min |
|---|---|---|---|---|---|
| 2 | Version 1 | 1 : 1 | 0,80 | 0 | 318 |
| 6 | - | 1 : 1 | 0,84 | 1/6 (0,17) | 538 |
| 7 | - | 1 : 1 | 0,80 | 1/2 (0,50) | 515 |

### Tableau 4 : conditions opératoires de la deuxième série d'essais

### Essai n°6 - version 1 - Lixiviation de limonite et saprolite à ratio 1 : 1, avec 0,17 g germes/ g minerais.

260 g sec de limonite, 258 g sec de saprolite et 88 g de germes de résidu jarosite en mélange sont ajoutés à 1580 ml d'eau de mer contenant 11 g/l Na dans le même réacteur que précédemment. 450 g d'acide sulfurique 96% sont ajoutés lentement au mélange de minerai en pulpe, soit 0,84 g d'H₂SO₄ /g sec de minerais. Le réacteur est équipé d'un système de bullage de dioxyde de soufre et d'une mesure de potentiel redox, et est mis en rotation à 538 tr/min.

Le milieu réactionnel est porté à une température entre 95°C et l'ébullition pendant toute la durée de l'essai. Après 15 minutes, le potentiel de la pulpe est contrôlé à environ 650 mV Ag/AgCl au maximum par ajout de SO₂ pendant environ 5 heures. L'évolution du potentiel est :

| | | | | | | | |
|---|---|---|---|---|---|---|---|
| Temps | 0h | 0.5 h | 1.0 h | 2.0 h | 4.0 h | 7.9h | 24.4 h |
| Potentiel (Ag/AgCl) | 936 mV | 757 mV | 691 mV | 628 mV | 622 mV | 621 mV | 588 mV |

Des prélèvements réguliers d'environ 50 ml de pulpe ont été effectués toutes les heures. Les prélèvements ont été filtrés immédiatement, les gâteaux lavés. Les filtrats, les lavages et les gâteaux lavés sont analysés.

Le mélange réactionnel final est filtré ; on récupère 990 ml de filtrat à 4,5 g/l Ni et 0,50 g/l Co, 11,2 g/l Fe et 36 g/l d'H₂SO₄. Le gâteau est lavé sur filtre et séché à poids constant. On récupère 484 g sec de résidu, soit en tenant compte des 88 g de germes ajouté au départ : 0,77 g de nouveau résidu /g de minerais.

Les rendements de lixiviation sont : 93,7% pour Ni,.96,5% pour Co et 9,6% pour Fe.

### Essai n°7 : version 1 - Lixiviation de limonite et saprolite à ratio 1 : 1, avec 0,50 g germes / g minerais.

333 g sec de limonite, 333 g sec de saprolite et 333 g de germes de résidu jarosite en mélange sont ajoutés à 2000 ml d'eau de mer contenant 11 g/l Na dans le même réacteur que précédemment. 556 g d'acide sulfurique 96% sont ajoutés lentement au mélange de minerai en pulpe, soit 0,80 g d'H₂SO₄ / g sec de minerais. Le réacteur est équipé d'un système de bullage de dioxyde de soufre et d'une mesure de potentiel redox, et est mis en rotation à 515 tr/min.

Le milieu réactionnel est porté à une température entre 95°C et l'ébullition pendant toute la durée de l'essai. Après 15 minutes, le potentiel de la pulpe est contrôlé à environ 650 mV Ag/AgCl au maximum par ajout de SO₂ pendant environ 5 heures. L'évolution du potentiel est :

| | | | | | | |
|---|---|---|---|---|---|---|
| Temps | 0.2 h | 0.5 h | 1.0 h | 2.1 h | 8.0 h | 24.3 h |
| Potentiel (Ag/AgCl) | 1050 mV | 808 mV | 623 mV | 625 mV | 591 mV | 551 mV |

Des prélèvements réguliers d'environ 50 ml de pulpe ont été effectués toutes les heures. Les prélèvements ont été filtrés immédiatement, les gâteaux lavés. Les filtrats, les lavages et les gâteaux lavés sont analysés.

Le mélange réactionnel final, qui constitue 2135 ml de pulpe, est filtré ; on récupère 1227 ml de filtrat à 4,8 ,g/g Ni et 0,51 g/l Co, 7,6 g/l Fe et 42 g/l d'H₂SO₄. Le gâteau est lavé sur filtre et séché à poids constant. On récupère 839 g sec de résidu, soit en tenant compte des 333 g de germes ajouté au départ : 0,76 g de nouveau résidu / g de minerais.

Les rendements de lixiviation sont : 97,1% pour Ni, 94,6% pour Co et 5,3% pour Fe.

Le suivi des évolutions des milieux réactionnels lors de la lixiviation permet de parvenir aux conclusions suivantes :

La présence de germes améliore sensiblement le rendement de lixiviation du Ni et accélère la cinétique de cette lixiviation, d'autant plus que la quantité de germes introduite est importante.

Dans l'essai 2, au bout d'une heure on a lixivié 72% du Ni, contre 75% dans l'essai 6 et 88% dans l'essai 7. Pour cet essai 7, on atteint 92,9% en seulement 2h, alors que l'essai 2 ne permet pas d'atteindre cette valeur, même après 24h. Après 8h dans l'essai 7, on atteint 96%, et 97% après 24h, ce qui est excellent et supérieur à ce que l'on obtient lors des essais de référence par l'application du procédé JAL. L'essai 6 permet, au bout de 24h, d'atteindre un rendement de 93,7%, donc tout aussi bon que celui des essais JAL de référence.

Les résultats de lixiviation du cobalt sont comparables dans les trois essais (94 - 96% atteints au bout de deux heures), pour les mêmes raisons qui ont été vues à propos de la série d'essais 1 - 5. On retrouve donc des résultats semblables à ceux des essais JAL de référence.

La cinétique de lixiviation du magnésium est rapide dans tous les cas (de 88 à 92% au bout d'une heure). Au bout de 24 heures on atteint des taux de lixiviation de l'ordre de 95% dans tous les cas. L'introduction des germes n'a pas d'effet assurément très significatif sur ce point.

La figure 3 montre l'évolution de la concentration en fer dans la fraction liquide de la pulpe au cours des essais 2, 6 et 7. On voit qu'après une dissolution initiale partielle du fer du minerai, la cinétique de précipitation du fer dans la jarosite est très dépendante de la quantité de germes introduite.

En l'absence de germes (essai 2), la précipitation du fer ne commence à l'emporter sur la dissolution qu'à partir de 3h environ, et la concentration en fer de la solution atteint au bout de 16h sa valeur minimale de 27,4 g/l, qui se maintient jusqu'à la fin de l'expérience (28h).

Avec 0,17 g/g de germes ajoutés (essai 6), la précipitation du fer l'emporte sur la dissolution au bout d'une heure environ, et on observe une poursuite de la précipitation jusqu'à l'obtention d'une teneur en fer de 11,2 g/l au bout de 24,4 h.

Avec 0,5 g/g de germes ajoutés (essai 7), là encore la précipitation du fer l'emporte sur sa dissolution au bout de 1 h. Au bout de seulement 8h, on a déjà atteint un niveau de fer dans la solution relativement bas, de 14g/l. Au bout de 24,3h ce niveau est de 7,6 g/l seulement, donc comparable à ce que l'on obtient dans les essais JAL de référence.

Ces expériences montrent clairement que l'introduction délibérée de germes de jarosite avant la lixiviation procure une très sensible accélération de la cinétique de précipitation de la jarosite, et permet d'obtenir une solution finale avant séparation liquide/solide à faible teneur en fer avec des temps de traitement pas trop longs.

La figure 4 montre l'évolution de la teneur en H₂SO₄ libre dans la fraction liquide de la pulpe au cours des essais. La lixiviation démarre en milieu très acide et la dissolution des composants du minerai consomme rapidement l'acide initialement introduit. Cette consommation est en compétition avec le relargage d'acide provoqué notamment par la précipitation de la jarosite. Il est donc normal que l'évolution qualitative des courbes de la teneur en H₂SO₄ libre suive assez sensiblement, mais de manière inversée, l'évolution qualitative des courbes de la teneur en fer de la figure 3.

En l'absence de germes de jarosite (essai 2), l'acidité diminue fortement jusqu'à 3-4h d'essai, puis remonte progressivement jusqu'à atteindre un palier à environ 28 g/l après 15h. La teneur finale au bout de 28h est de 25 g/l.

Avec 0,17 g/g de germes de jarosite (essai 6), l'acidité cesse de diminuer après 2h et remonte progressivement au fil de la précipitation de la jarosite, jusqu'à atteindre 36 g/l après 24h. Avec 0,50 g/g de germes de jarosite (essai 7), on observe une évolution similaire, jusqu'à une teneur finale de 42 g/l au bout de 24,3h.

L'acidité en début d'essai est d'autant moins diminuée que la quantité de germes introduits est forte. Avec l'introduction des germes, on favorise donc grandement la disponibilité de l'acide libre pour la lixiviation des minerais, et cela explique les meilleurs rendements de lixiviation du nickel observés dans les essais 6 et 7 par rapport à l'essai 2, à quantité d'acide introduite comparable. L'opérateur a donc le choix entre deux solutions et leurs compromis :
- soit profiter de l'introduction des germes pour diminuer la quantité d'acide introduite en visant un rendement de lixiviation du nickel identique ;
- soit conserver la même quantité d'acide introduite qu'en l'absence de germes, et récupérer au final une quantité de nickel supérieure à celle obtenue en l'absence de germes grâce à l'augmentation du rendement de lixiviation.

En prenant en compte le cours des métaux, les frais miniers, le coût des matières consommables, les investissements et l'entretien du matériel, un calcul économique permettra à l'opérateur de choisir la solution la mieux adaptée à son cas, notamment en fonction des caractéristiques du gisement qu'il doit valoriser.

On constate également que l'introduction de germes de jarosite permet aussi d'augmenter la précipitation de l'aluminium et du chrome parallèlement à celles du fer, du soufre et du sodium. On retrouvera donc ces deux éléments en plus faibles quantités dans la solution finale. La présence de ces éléments à titre d'impuretés dans les concentrés intermédiaires ou les produits commerciaux de nickel et de cobalt obtenus à partir de cette solution sera donc plus réduite ou leur élimination ultérieure sera facilitée.

De manière générale, l'adjonction au procédé selon l'invention, dans ses deux versions, d'une addition de germes de jarosite à la pulpe de limonite et saprolite, avant sa lixiviation, permet au procédé selon l'invention de procurer des résultats aussi bons que ceux du procédé JAL, sans nécessiter de séparation initiale de la fraction limonitique et de la fraction saprolitique du minerai, donc dans de meilleures conditions économiques. Optimalement, les germes de jarosite utilisés résultent d'une séparation solide/liquide effectuée sur une fraction de la pulpe lixiviée obtenue lors de la mise en oeuvre du procédé lui-même, de sorte qu'aucun apport de matière extérieure au procédé n'est nécessaire pour bénéficier de cette amélioration.

## Revendications

1. Procédé de traitement hydrométallurgique d'un mineral de nickel et de cobalt de type latéritique constitué par un mélange (2) de limonite et de saprolite, **caractérisé en ce qu'**il consiste en les étapes suivantes :
- mettre en pulpe (1) le mélange (2) de limonite et de saprolite en présence d'un agent précipitant le fer, pour former une pulpe initiale, avec un taux de matières solides compris entre 10 et 40% en poids, de préférence entre 20 et 30%.
- réaliser une lixiviation (4) de la pulpe initiale de limonite et de saprolite avec de l'acide sulfurique (5), à une température comprise entre 70°C et le point d'ébullition de la solution, de préférence entre 90°C et l'ébullition, à pression atmosphérique ;
- réaliser optionnellement une neutralisation (7) de la pulpe issue de la lixiviation (4), de manière à obtenir un pH compris entre 2 et 3 ;
- et réaliser une séparation solide - liquide (8) sur ladite pulpe, de préférence par décantation et lavage à contre-courant ou filtration, de manière à obtenir un résidu solide (9) contenant du fer principalement à l'état de jarosite, et une solution contenant des ions nickel et cobalt.

2. Procédé selon la revendication 1, **caractérisé en ce que** le ratio saprolite/limonite du mélange (2) est compris entre 0,5 et 3.

3. Procédé selon la revendication 1 ou 2, **caractérisé en ce que** le temps de séjour de la pulpe lors de la lixiviation (4) à l'acide sulfurique est compris entre 1 et 24h, de préférence 6 à 12h.

4. Procédé selon l'une des revendications 1 à 3, **caractérisé en ce que** la quantité d'acide sulfurique (5) ajoutée lors de la lixiviation de la pulpe est telle que la concentration de la pulpe en acide sulfurique en fin de lixiviation (4) est de 10 à 50 g/l, de préférence 20 à 40 g/l.

5. Procédé selon la revendication 1, **caractérisé en ce que** la ratio saprolite/limonite du mélange (2) autorise l'obtention, en fin d'une première étape de sa lixiviation (4), d'une concentration en acide sulfurique de 25 à 50 g/l, et **en ce que** de plus, on réalise séparément une mise en pulpe (12) de saprolite (13) avec un taux de matières solides compris entre 10 et 40% en poids, de préférence entre 20 et 30%, **en ce que** ladite pulpe de saprolite est ajoutée à la pulpe de saprolite et de limonite, en cours de lixiviation, de manière à procéder à une deuxième étape (11) de ladite lixiviation pendant une durée de 5 à 8h, à une température comprise entre 70°C et le point d'ébullition de la solution, de préférence entre 90°C et l'ébullition, la concentration de la pulpe en acide sulfurique en fin de la deuxième étape (11) de la lixiviation étant comprise entre 10 et 50 g/l, de préférence entre 20 et 40 g/l, avant de procéder à ladite neutralisation (7) optionnelle et à ladite séparation solide/liquide (8).

6. Procédé selon la revendication 5, **caractérisé en ce que** le temps de séjour de la pulpe initiale de limonite et saprolite, lors de la première étape (4) de la lixiviation, est compris entre 1 h et 8h, de préférence 4 à 6h.

7. Procédé selon l'une des revendications 1 à 6, **caractérisé en ce qu'**on réalise la lixiviation (4 ; 4,11) en présence d'un agent réducteur, tel que du SO₂, maintenant le potentiel électrochimique inférieur ou égal à 1000 mV par rapport à l'électrode normale à hydrogène.

8. Procédé selon l'une des revendications 1 à 7, **caractérisé en ce que** la lixiviation (4 ; 4,11) de la pulpe initiale de limonite et de saprolite est réalisée en présence de germes de jarosite.

9. Procédé selon la revendication 8, **caractérisé en ce que** le ratio germes/minerais est compris entre 0 et 2, de préférence entre 0,2 et 0,6.

10. Procédé selon la revendication 8 ou 9, **caractérisé en ce que** lesdits germes sont constitués par la fraction solide obtenue lors d'une séparation solide/liquide (6) d'une partie de la pulpe issue de ladite lixiviation (4, 11), de préférence dans un décanteur.

11. Procédé selon la revendication 10, **caractérisé en ce que** ladite fraction solide issue de ladite séparation (6) a un taux de solides d'au moins 30%.

12. Procédé selon la revendication 11, **caractérisé en ce que** lesdits germes résultent de la filtration de ladite fraction solide issue de ladite séparation (6).

13. Procédé selon l'une des revendications 1 à 12, **caractérisé en ce que** l'agent précipitant le fer est choisi parmi Na⁺, K⁺ et NHₐ⁺.

14. Procédé selon la revendication 13, **caractérisé en ce que** l'ajout d'agent précipitant le fer est réalisé au moins en partie par l'utilisation d'eau de mer (3, 14) pour ladite mise en pupe (1) du mélange (2) de limonite et de saprolite et/ou pour ladite mise en pulpe (12) de la saprolite (13).

15. Procédé de préparation de concentrés intermédiaires ou de produits commerciaux de nickel et/ou de cobalt à partir d'un minerai latéritique, **caractérisé en ce que** :
- on procède à un traitement hydrométallurgique dudit minerai latéritique selon l'une des revendications 1 à 14 ;
- et on exécute sur ladite solution contenant les ions nickel et cobalt des opérations (10) de purification et de récupération du nickel et/ou du cobalt sous forme de concentrés intermédiaires ou de produits commerciaux.

## Patentansprüche

1. Hydrometallurgisches Behandlungsverfahren für ein nickel- und kobalthaltiges lateritisches Mineral, das aus einer Mischung (2) aus Limonit und weichem Zerfallsgestein, **dadurch gekennzeichnet, dass** es aus den nachfolgenden Schritten besteht:
- Zermalmen (1) der Mischung (2) aus Limonit und weichem Zerfallsgestein in Gegenwart eines Mittels zur Ausfällung von Eisen zur Herstellung einer Ausgangspulpe mit einem Feststoffanteil zwischen 10 und 40 Gew. %, vorzugsweise zwischen 20 und 30 %;
- Auswaschen (4) der Ausgangspulpe aus Limonit und weichem Zerfallsgestein mit Schwefelsäure (5) bei einer Temperatur zwischen 70 °C und dem Siedepunkt der Lösung, vorzugsweise zwischen 90 °C und dem Siedepunkt bei atmosphärischem Druck;
- wahlweises Neutralisieren (7) der aus der Auswaschung resultierenden Pulpe (4), um einen pH-Wert zwischen 2 und 3 zu erreichen;
- und Separieren (8) des Feststoffs aus der Flüssigkeit der Pulpe, vorzugsweise durch Umfüllen und Waschen gegen die Strömung oder mit Filtration, um einen festen Rückstand (9) zu erhalten, der Eisen v.a. in Form von Jarosit und eine Lösung, die Nickel- und Kobaltionen enthält, enthält.

2. Verfahren nach Anspruch 1, **dadurch gekennzeichnet, dass** das Verhältnis des weichen Zerfallsgesteins zum Limonit in der Mischung (2) zwischen 0,5 und 3 liegt.

3. Verfahren nach Anspruch 1 oder 2, **dadurch gekennzeichnet, dass** die Verweilzeit der Pulpe bei der Auswaschung (4) mit Schwefelsäure zwischen 1 und 24 h, vorzugsweise 6 und 12 h liegt.

4. Verfahren nach einem der Ansprüche 1 - 3, **dadurch gekennzeichnet, dass** die Menge an Schwefelsäure (5), die bei der Auswaschung der Pulpe hinzugegeben wird derart ist, dass die Schwelfelsäurekonzentration der Pulpe zum Abschluss der Auswaschung (4) zwischen 10 und 50 g/l, vorzugsweise 20 und 40 g/l liegt.

5. Verfahren nach Anspruch 1, **dadurch gekennzeichnet, dass** das Verhältnis des weichen Zerfallsgesteins zum Limonit in der Mischung (2) zulässt, dass sich am Ende einer erste Phase der Auswaschung (4) eine Schwefelsäurekonzentration zwischen 25 und 50 g/l ergibt; und dass außerdem eine gesonderte Zermalmung (12) des weichen Zerfallsgesteins (13) mit einem Feststoffanteil zwischen 10 und 40 Gew. %, vorzugsweise zwischen 20 und 30 Gew. % erfolgt; dass diese Pulpe aus weichem Zerfallsgestein bei der Auswaschung der Pulpe aus weichem Zerfallsgestein und Limonit hinzugegeben wird, um eine weite Phase (11) der Auswaschung einzuleiten, die 5 - 8 h dauert und bei einer Temperatur zwischen 70 °C und dem Siedepunkt der Lösung, vorzugsweise zwischen 90 °C und dem Siedepunkt erfolgt, wobei die Schwefelsäurekonzentration der Pulpe am Ende der zweiten Phase (11) der Auswaschung zwischen 10 und 50 g/l, vorzugsweise zwischen 20 und 40 g/l liegt, bevor die wahlweise Neutralisierung (7) und die Separation (8) der Festkörper aus der Flüssigkeit erfolgen.

6. Verfahren nach Anspruch 5, **dadurch gekennzeichnet, dass** die Verweilzeit der Ausgangspulpe aus Limonit und weichem Zerfallsgestein in der ersten Phase (4) der Auswaschung zwischen 1 und 8 h, vorzugsweise 4 und 6 h liegt.

7. Verfahren nach einem der Ansprüche 1 - 6, **dadurch gekennzeichnet, dass** die Auswaschung (4; 4, 11) in Gegenwart eines Reduktionsmittels erfolgt, und dabei das elektrochemische Potenzial kleiner oder gleich 1000 mV relativ zur normalen Wasserstoffelektrode gehalten wird.

8. Verfahren nach einem der Ansprüche 1 - 7, **dadurch gekennzeichnet, dass** die Auswaschung (4; 4,11) der Ausgangspulpe aus Limonit und weichem Zerfallsgestein in Gegenwart von Jarositkernen erfolgt.

9. Verfahren nach Anspruch 8, **dadurch gekennzeichnet, dass** das Verhältnis der Kerne zu den Mineralien zwischen 0 und 2, vorzugsweise zwischen 0,2 und 0,6 liegt.

10. Verfahren nach Anspruch 8 oder 9, **dadurch gekennzeichnet, dass** die Kerne aus der festen Fraktion bestehen, die sich aus der Separation (6) der Festkörper aus der Flüssigkeit eines Teils der sich aus der Auswaschung (4, 11) ergebenden Pulpe, die vorzugsweise in einem Dekanter erfolgt.

11. Verfahren nach Anspruch 10, **dadurch gekennzeichnet, dass** die aus der Separation (6) resultierende Festkörperfraktion einen Feststoffanteil von mindestens 30 % aufweist.

12. Verfahren nach Anspruch 11, **dadurch gekennzeichnet, dass** sich die Kerne aus der Filtration der aus der Separation (6) resultierenden Festkörperfraktion ergeben.

13. Verfahren nach einem der Ansprüche 1 - 12, **dadurch gekennzeichnet, dass** das Mittel zur Ausfällung des Eisens aus Na⁺, K⁺ und NH₄⁺ gewählt ist.

14. Verfahren nach Anspruch 13, **dadurch gekennzeichnet, dass** die Zugabe des Mittels zur Ausfällung des Eisens mindestens Teilweise mittels Meerwassers (3, 14) zur Zermalmung (1) der Mischung (2) aus Limonit und weichem Zerfallsgestein und/oder zur Zermalmung (12) des weichen Zerfallsgesteins (13) erfolgt.

15. Verfahren zur Herstellung von Zwischenkonzentraten oder kommerziellen Produkten aus Nickel und/oder aus Kobald aus einem lateritischen Mineral, **dadurch gekennzeichnet, dass**:
- eine hydrometallurgische Behandlung des lateritischen Minerals nach einem der Ansprüche 1- 14 erfolgt;
- und an der nickel- und kobaldionenhaltigen Lösung Schritte (10) zur Reinigung und Gewinnung des Nickels und/oder Kobalts in Form von Zwischenkonzentraten oder kommerziellen Produkten erfolgen.

## Claims

1. Process for the hydrometallurgical treatment of a lateritic nickel/cobalt ore consisting of a mixture (2) of limonite and saprolite, **characterised in that** it consists in the following steps:
- Making the limonite and saprolite mixture (2) into a pulp (1) in the presence of an iron-precipitating agent so as to form an initial pulp having a solids content of between 10 and 40 % by weight, preferably between 20 and 30 %;
- Performing on the initial limonite and saprolite pulp a leaching process (4) with sulphuric acid (5) at a temperature between 70 °C and the boiling point of the solution, preferably between 90 °C and the boiling point, at atmospheric pressure;
- Optionally performing on the pulp obtained by the leaching process (4) a neutralisation process (7) so as to have a pH between 2 and 3;
- And carrying out a solid-liquid separation process (8) on said pulp, preferably by decantation and counter current washing or filtration, so as to obtain an iron-containing solid residue (9), which is mainly in jarosite form, and a solution containing nickel and cobalt ions.

2. Process according to claim 1, **characterised in that** the saprolite/limonite ratio of the mixture (2) is between 0.5 and 3.

3. Process according to either claim 1 or claim 2, **characterised in that** the retention time of the pulp during the leaching process (4) with sulphuric acid is between 1 and 24 h, preferably 6 to 12 h.

4. Process according to any one of claims 1 to 3, **characterised in that** the amount of sulphuric acid (5) added when the pulp is leached is such that the concentration of sulphuric acid in the pulp at the end of the leaching process (4) is from 10 to 50 g/l, preferably from 20 to 40 g/l.

5. Process according to claim 1, **characterised in that** the saprolite/limonite ratio of the mixture (2) makes it possible, after a first step of the leaching process (4) thereof, to obtain a concentration of sulphuric acid of from 25 to 50 g/l, and **in that** saprolite (13) is also separately made into a pulp (12) having a solids content of between 10 and 40 % by weight, preferably between 20 and 30 %, **in that** the saprolite pulp is added to the saprolite and limonite pulp during the leaching process so as to proceed with a second step (11) of said leaching process for between 5 and 8 h, at a temperature between 70 °C and the boiling point of the solution, preferably between 90 °C and the boiling point, the concentration of sulphuric acid in the pulp after the second step (11) of the leaching process being between 10 and 50 g/l, preferably between 20 and 40 g/l, before proceeding with said optional neutralisation process (7) and said solid-liquid separation (8).

6. Process according to claim 5, **characterised in that** the retention time of the initial limonite and saprolite pulp during the first step (4) of the leaching process is between 1 h and 8 h, preferably from 4 to 6 h.

7. Process according to any one of claims 1 to 6, **characterised in that** the leaching process (4; 4, 11) is carried out in the presence of a reducing agent, such as SO₂, keeping electrochemical potential less than or equal to 1,000 mV relative to the standard hydrogen electrode.

8. Process according to any one of claims 1 to 7, **characterised in that** the process (4; 4, 11) for leaching the initial limonite and saprolite pulp is carried out in the presence of jarosite seeds.

9. Process according to claim 8, **characterised in that** the seeds/ore ratio is between 0 and 2, preferably between 0.2 and 0.6.

10. Process according to either claim 8 or claim 9, **characterised in that** said seeds are formed by the solid fraction obtained during the solid-liquid separation (6) of some of the pulp obtained by said leaching process (4, 11) preferably in a decanter.

11. Process according to claim 10, **characterised in that** said solid fraction obtained by said separation process (6) has a solids content of at least 30 %.

12. Process according to claim 11, **characterised in that** said seeds are obtained by filtering said solid fraction obtained by said separation process (6).

13. Process according to any one of claims 1 to 12, **characterised in that** the iron-precipitating agent is selected from Na⁺, K⁺ and NH₄⁺.

14. Process according to claim 13, **characterised in that** the iron-precipitating agent is added at least in part by using sea water (3, 14) in order to make the limonite and saprolite mixture (2) into a pulp (1) and/or in order to make saprolite (13) into a pulp (12).

15. Process for preparing nickel and/or cobalt intermediate concentrates or commercial products from a lateritic ore, **characterised in that**:
- the hydrometallurgical treatment of said lateritic ore is carried out according to any one of claims 1 to 14;
- said solution containing nickel and cobalt ions undergoes processes (10) to purify and recover the nickel and/or cobalt in the form of intermediate concentrates or commercial products.
